# FASCICULE DE BREVET EUROPEEN

(11) **EP 0 610 167 B1**
(45) Date de publication et mention de la délivrance du brevet: **27.12.1996**
(21) Numéro de dépôt: 94870011.7
(22) Date de dépôt: 25.01.1994
(51) Int. Cl.: C23C 2/00, F16C 33/04, F16C 33/30

(54) **Equipement pour rouleaux de galvanisation à chaud**
Umlenkvorrichtungen von Verzinkungseinrichtungen
Roll devices for hot dip coating bath

(30) Priorité: 01.02.1993 BE 9300098
(43) Date de publication de la demande: 10.08.1994
(73) Titulaire: COCKERILL SAMBRE, B-4100 Seraing (BE)
(72) Inventeur: Monaco, Enzo, B-4100 Seraing (BE)
(74) Mandataire: Vanderperre, Robert

(56) Documents cités:
- EP-A- 0 556 833
- DE-B- 1 129 796
- PATENT ABSTRACTS OF JAPAN vol. 14, no. 406 (C-754)(4349) 4 Septembre 1990 & JP-A-21 053 055 (SUMITOMO METAL IND) 12 Juin 1990
- PATENT ABSTRACTS OF JAPAN vol. 14, no. 406 (C-754)(4349) 4 Septembre 1990 & JP-A-21 053 055

## Description

La présente invention concerne une amélioration aux rouleaux de fond et aux rouleaux étaleurs ou stabilisateurs utilisés sur des lignes de galvanisation et qui, complètement immergés dans les bains en fusion, servent à la galvanisation de tôles en acier, laminées à chaud ou à froid, bains se trouvant à une température comprise, suivant les qualités de revêtement désirées, entre 450° C et 660° C.

Actuellement, les rouleaux de fond et les rouleaux étaleurs montés entre deux bras supports parallèles, tournent sur des paliers fixes, composés d'une buselure intérieure frettée sur le tourillon du rouleau en rotation et d'une buselure extérieure frettée dans le logement des bras supports.

Le rouleau de fond qui, dans le bain liquide infléchi le parcours de la tôle, est en contact avec elle sur un angle de plus ou moins 140° et tourne librement, donc sans commande extérieure et le déplacement latéral est limité par des arrêts latéraux.

Le rouleau étaleur, qui détermine la ligne de passe de la tôle entre les jets d'air d'essorage, est commandé par un côté et son déplacement latéral est limité par un arrêt butoir du côté non entraîné.

Ce système actuel présente divers inconvénients. En effet, bien que le montage se fasse avec un jeu faible (3 mm à 10 mm) entre les buselures, ce jeu augmente rapidement à cause de la friction entre parties dynamiques et parties statiques, provoquant ainsi de fortes variations du jeu. Ces variations amènent des vibrations de grande amplitude des tôles et par voie de conséquence, de fortes variations dans les épaisseurs des dépôts de zinc lors du passage entre les jets d'essorage, ainsi que des déformations indésirables.

Ces inconvénients amènent à des manutentions fréquentes pour le remplacement des buselures de rotation tant sur les axes de fusées que sur les bras supports et par là le remplacement des rouleaux dans le bain de zinc.

Diverses solutions ont déjà été envisagées. Par exemple, la bague interne peut être soudée sur le tourillon mais, à cause du danger de fissuration de ladite bague suite aux tensions apparaissant lors de l'opération de soudage, c'est une opération très délicate.

La bague interne peut avoir une forme particulière en chapeau pour être vissée sur le tourillon sans serrage et servir aussi de butée latérale. Dans ce cas aussi, il y a risque de fissuration.

Cette bague interne peut aussi être constituée par un rechargement du tourillon par soudure de couches successives d'un même matériau que celui décrit pour la bague, mais les inconvénients de fissuration restent présents.

Quant à la bague externe, elle peut être remplacée par des secteurs aussi de même matériau, de manière à créer des zones de vide facilitant l'évacuation du bain, le réglage du jeu s'effectuant par l'intermédiaire de vis de rattrapage de jeu. Dans le même but cette bague peut aussi présenter une forme particulière. De telles réalisations améliorent la stabilité du rouleau et diminuent plus ou moins le coefficient de friction, mais elles augmentent de beaucoup le coût et les difficultés d'usinage et de montage.

Le but de l'invention est de pallier ces divers inconvénients en créant un équipement pour rouleau de galvanisation permettant, entre autres, de réduire fortement l'usure et par voie de conséquence d'éliminer complètement les vibrations des tôles et leurs déformations, et donc d'obtenir un dépôt de zinc beaucoup plus régulier et conforme à la demande.

Un rouleau de galvanisation à chaud suivant l'invention, rouleau de fond ou rouleau étaleur, est caractérisé en ce que ses tourillons ou axes de fusée sont équipés chacun, en lieu et place des buselures, d'un roulement complet à galets pleins à jeu partiel. Pour le rouleau de fond le lubrifiant est constitué par le bain métallique en fusion, avec ou sans additifs, dans lequel le roulement est complètement immergé.

Suivant l'invention, chaque roulement se compose d'une bague constituant un palier interne mâle mobile, frettée sur le tourillon du rouleau, d'une bague constituant un palier externe femelle fixe, frettée à l'intérieur du bras support de rouleau, et d'une cage à galets pleins. Les mouvements latéraux sont limités, pour les roulements, par des contreplaques ou flasques droit et gauche boulonnés respectivement de part et d'autre du bras support et, pour le rouleau lui-même, par une butée latérale également boulonnée sur le bras support et une vis butée vissée sur le bout droit du tourillon.

Pour mieux faire comprendre l'invention celle-ci est décrite maintenant avec plus de détails sur la base des dessins annexés, à titre d'exemple uniquement, montrant en :

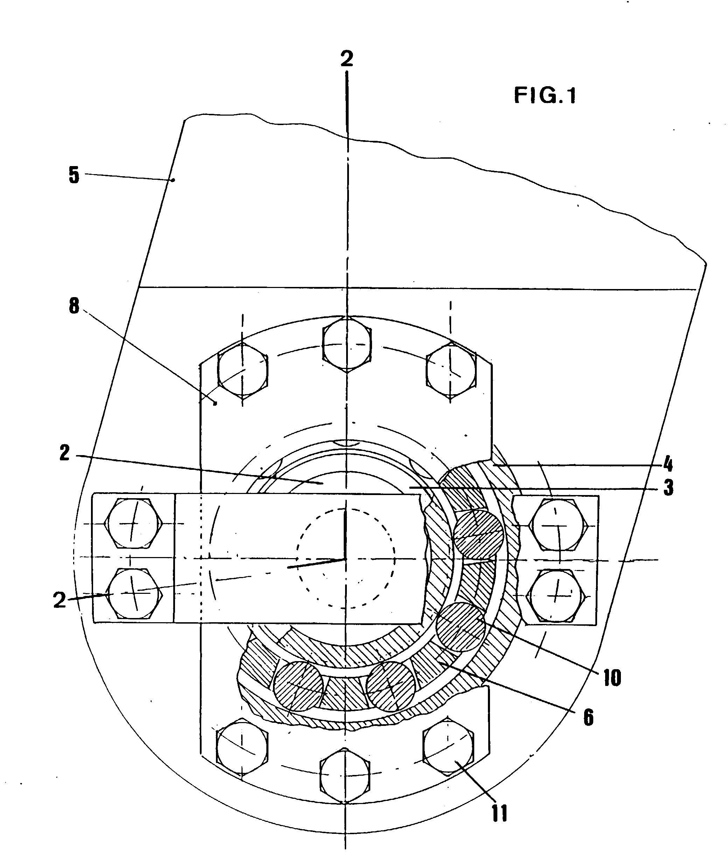

Figure 1 une vue latérale d'un rouleau étaleur équipé d'un roulement à galets suivant l'invention ;

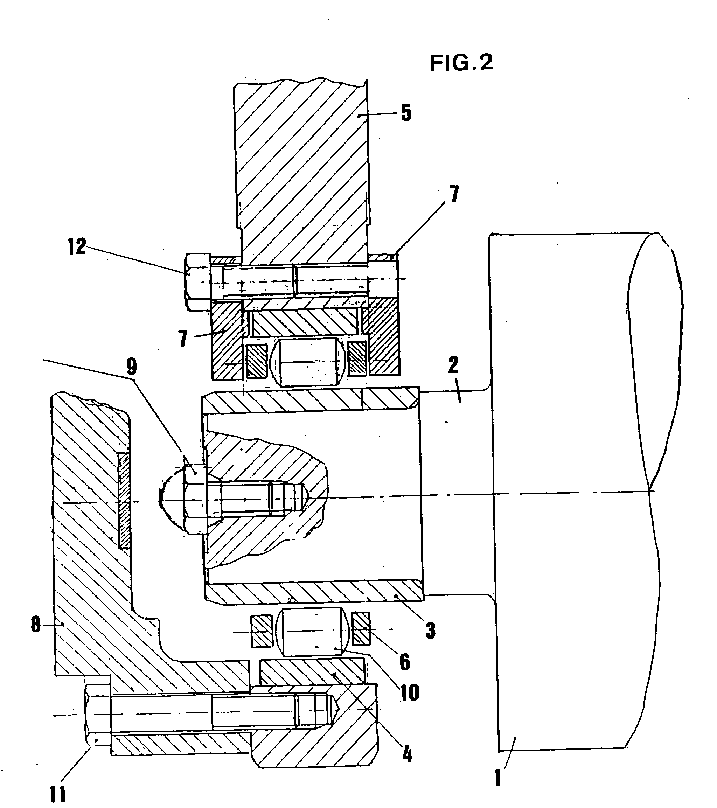

Figure 2 une coupe par 2 - 2 de la figure 1.

On voit aux dessins un rouleau étaleur 1 avec son tourillon gauche 2. Sur ce tourillon est monté un roulement à galets, qui se compose d'une bague ou palier interne mâle mobile 3 fretté sur ledit tourillon 2, d'une bague ou palier externe femelle fixe 4 fretté à l'intérieur du bras support 5 du rouleau étaleur 1, d'une cage à galets 6, de contreplaques ou flasques 7 boulonnées de part et d'autre du bras 5, d'une butée latérale 8 également boulonnée sur le bras support 5 et d'une vis butée 9 vissée sur le bout du tourillon 2.

La bague interne 3 est frettée sur le tourillon 2 du rouleau 1 avec un serrage à froid tenant compte du coëfficient de dilatation et de la limite élastique des matériaux utilisés. Il en est de même de la bague externe 4 frettée dans le logement du bras support 5.

Les galets pleins 10 de la cage 6 sont cylindriques et interchangeables, c'est-à-dire qu'ils sont insérés librement dans les encoches adéquates ouvertes de ladite cage 6 et leurs extrémités sont bombées et libres.

Le jeu entre les galets pleins 10 et les paliers 3, 4 est minimum au montage à froid du roulement. De même, le jeu est minimum au montage entre la cage 6 et les contreplaques ou flasques 7.

Les contreplaques ou flasques 7 sont construits, de telle façon que le bain métallique en fusion peut librement circuler à l'intérieur du roulement en fonctionnement pour servir de lubrifiant, et de telle façon que le roulement à l'arrêt peut être nettoyé sans démontage lors du décapage par bain de HCL.

Le roulement suivant l'invention est bimétallique, c'est-à-dire qu'il est constitué de deux matériaux métalliques :
- d'une part, les paliers 3, 4, la cage 6, les contre-plaques ou flasques 7 et la vis butée 9 sont en alliage super-réfractaire et très résistant à l'abrasion, par exemple un alliage au cobalt très riche en carbure de tungstène et de chrome, type stellite;
- d'autre part, la butée latérale 8, les vis 11 de ladite butée et les vis 12 des contreplaques ou flasques 7 sont en acier inoxydable, par exemple IMS 254, extrêmement résistant à la corrosion à chaud.

La présente invention apporte divers avantages.
- Le remplacement des buselures utilisées actuellement par des roulements permet de réduire l'effort de traction de la tôle sur les rouleaux à ± 10 % de la valeur actuelle, à cause du coefficient de roulement entre parties dynamique et statique, au lieu d'un coëfficient de frottement, avec pour conséquence une forte réduction voire une élimination complète des vibrations des tôles et donc de leurs déformations;
- Les remplacements des rouleaux dans le bain de zinc sont espacés considérablement;
- Les roulements peuvent être réutilisés après décapage à l'acide et nettoyage mécanique;
- L'entraînement par moto-réducteur du rouleau étaleur, du moins pour des tôles d'épaisseur moyenne, peut être supprimé, ce qui entraîne l'élimination de certains défauts de surface du produit dus à la non synchronisation parfaite entre les vitesses du rouleau et de la tôle.

## Revendications

1. Rouleau de galvanisation à chaud, travaillant complètement immergé dans un bain métallique en fusion, caractérisé en ce que chaque tourillon ou axe de fusée (2) de rouleau de fond ou de rouleau étaleur (1) est équipé d'un roulement complet à galets pleins (10), montés avec jeu de manière que leur surface extérieure soit libre afin que le bain métallique en fusion puisse circuler librement à l'intérieur du roulement en fonctionnement et serve lui-même de lubrifiant.

2. Rouleau de galvanisation suivant la revendication 1, caractérisé en ce que chaque roulement se compose d'une bague (3) constituant un palier interne mâle montée sur le tourillon (2) du rouleau (1), d'une bague (4) constituant un palier externe femelle fixe, frettée à l'intérieur du bras support de rouleau (5), d'une cage (6) à galets pleins dans laquelle les galets (10) sont insérés librement avec jeu, de contreplaques ou flasques droit et gauche (7) boulonnés respectivement de part et d'autre du bras support (5), d'une butée latérale (8) également boulonnée sur le bras support (5) et d'une vis butée (9) vissée sur le bout droit du tourillon (2).

3. Rouleau de galvanisation suivant la revendication 2, caractérisé en ce que la bague (3) est mobile et frettée sur le tourillon (2) du rouleau (1).

4. Rouleau de galvanisation suivant une ou plusieurs des revendications 1 à 3, caractérisé en ce que les galets pleins (10) sont cylindriques et librement insérés dans des encoches ouvertes de la cage (6).

5. Rouleau de galvanisation suivant une ou plusieurs des revendications 1 à 4, caractérisé en ce que au montage à froid du roulement le jeu est minimum entre les galets (10) et les paliers (3, 4) et entre la cage (6) et les contreplaques ou flasques (7).

6. Rouleau de galvanisation suivant une ou plusieurs des revendications 1 à 5, caractérisé en ce que les contreplaques ou flasques (7) sont conformés de telle manière que le bain métallique en fusion peut circuler librement à l'intérieur du roulement en fonctionnement et que le bain de décapage permet de nettoyer le roulement après enlèvement du rouleau de la ligne sans démontage supplémentaire.

7. Rouleau de galvanisation suivant une ou plusieurs des revendications 1 à 6, caractérisé en ce que les bagues (3, 4), la cage (6) et ses galets (10), les contreplaques ou flasques (7) et la vis-butée (9) sont en un alliage superréfractaire et très résistant à l'abrasion.

8. Rouleau de galvanisation suivant une ou plusieurs des revendications 1 à 7, caractérisé en ce que la butée latérale (8), les vis (11) de ladite butée et les vis (12) des contreplaques ou flasques (7) sont en un acier inoxydable extrêmement résistant à la corrosion à chaud.

## Patentansprüche

1. Warmgalvanisierwalze, die vollständig in ein Bad aus geschmolzenem Metall eingetaucht arbeitet, dadurch gekennzeichnet, daß jeder Zapfen oder Achsstummel (2) der unteren Walze oder der Aufbringwalze (1) mit einem vollrolligen Wälzlager mit massiven Wälzkörpern (10) versehen ist, die mit Spiel montiert sind, derart, daß ihre Außenflächen frei sind, so daß das Metallschmelzbad frei im Inneren des Wälzlagers zirkulieren und selbst als Schmiermittel dienen kann.

2. Galvanisierwalze nach Anspruch 1, dadurch gekennzeichnet, daß jedes Wälzlager aufweist: eine Hülse (3), die ein auf dem Zapfen (2) der Walze (1) angebrachtes inneres männliches Lager bildet, eine in das Innere des Tragarmes (5) der Walze eingepreßte Hülse (4), die ein feststehendes äußeres weibliches Lager bildet, einen Käfig (6) mit massiven Wälzkörpem, in den die Wälzkörper (10) frei mit Spiel eingesetzt sind, rechte und linke Druckplatten oder Flansche (7), die jeweils auf beiden Seiten des Tragarmes (5) durch Bolzen befestigt sind, einen seitlichen Anschlag (8), der ebenfalls an dem Tragarm (5) durch Bolzen befestigt ist, und eine Anschlagschraube (9), die am rechten Ende des Zapfens (2) eingeschraubt ist.

3. Galvanisierwalze nach Anspruch 2, dadurch gekennzeichnet, daß die Hülse (3) bewegbar und auf dem Zapfen (2) der Walze (1) aufgeschrumpft ist.

4. Galvanisierwalze nach einem oder mehreren der Ansprüche 1 bis 3, dadurch gekennzeichnet, daß die massiven Wälzkörper (10) zylindrisch und frei in offenen Nuten des Käfigs (6) eingesetzt sind.

5. Galvanisierwalze nach einem oder mehreren der Ansprüche 1 bis 4, dadurch gekennzeichnet, daß bei der kalten Montage des Lagers das Spiel zwischen den Wälzkörpern (10) und den Lagern (3, 4) und zwischen dem Käfig (6) und den Druckplatten oder Flanschen (7) minimal ist.

6. Galvanisierwalze nach einem oder mehreren der Ansprüche 1 bis 5, dadurch gekennzeichnet, daß die Druckplatten oder Flansche (7) derart ausgebildet sind, daß das Metallschmelzbad beim Betrieb frei im Inneren des Wälzlagers zirkulieren kann, und daß das Beizbad das Reinigen des Wälzlagers nach dem herausheben der Walze aus der Linie ohne zusätzliche Demontagearbeiten ermöglicht.

7. Galvanisierwalze nach einem oder mehreren der Ansprüche 1 bis 6, dadurch gekennzeichnet, daß die Hülsen (3, 4), der Käfig (6) und dessen Wälzkörper (10), die Druckplatten oder Flansche (7) und die Anschlagschraube (9) aus einer hoch feuerfesten und sehr abriebfesten Legierung bestehen.

8. Galvanisierwalze nach einem oder mehreren der Ansprüche 1 bis 7, dadurch gekennzeichnet, daß der seitliche Anschlag (8), die Schrauben (11) des Anschlags und die Schrauben (12) der Druckplatten oder Flansche (7) aus rostfreiem Stahl bestehen, der gegen Warm-Korrosion extrem beständig ist.

## Claims

1. Hot galvanizing roll, working completely immersed in a bath of molten metal, characterized in that each journal or spindle axle (2) of the bottom roller or the spreading roller (1) is equipped with a full rolling bearing with solid rollers (10), mounted with clearance so that their outer surface is free in order that the bath of molten metal can circulate freely inside the rolling bearing in operation and itself serves as a lubricant.

2. Galvanizing roll according to Claim 1, characterized in that each rolling bearing consists of a ring (3) constituting an inner, male, bearing mounted on the journal (2) of the roll (1), of a ring (4) constituting an outer, fixed female, bearing shrunk-on inside the roll support arm (5), of a cage (6) with solid rollers in which the rollers (10) are inserted free with clearance, of right-hand and left-hand back plates or flanges (7) bolted respectively on either side of the support arm (5), of a lateral stop (8) also bolted on the support arm (5), and of a stop screw (9) screwed on the vertical end of the journal (2).

3. Galvanizing roll according to Claim 2, characterized in that the ring (3) is movable and shrunk on the journal (2) of the roll (1).

4. Galvanizing roll according to one or more of Claims 1 to 3, characterized in that the solid rollers (10) are cylindrical and inserted free in open notches of the cage (6).

5. Galvanizing roll according to one or more of Claims 1 to 4, characterized in that at the cold mounting of the rolling bearing the play is minimal between the rollers (10) and the bearings (3, 4) and between the cage (6) and the back plates or flanges (7).

6. Galvanizing roll according to one or more of Claims 1 to 5, characterized in that the back plates or flanges (7) are shaped in such a way that the bath of molten metal can circulate freely inside the rolling bearing in operation and that the pickling bath allows the rolling bearing to be cleaned after removal of the roll from the line without additional dismantling.

7. Galvanizing roll according to one or more of Claims 1 to 6, characterized in that the rings (3, 4), the cage (6) and its rollers (10), the back plates or flanges (7) and the stop screw (9) are made of a super-refractory alloy which is very resistant to abrasion.

8. Galvanizing roll according to one or more of Claims 1 to 7, characterized in that the lateral stop (8), the screws (11) of the said stop and the screws (12) of the back plates or flanges (7) are made of a stainless steel extremely resistant to hot corrosion.
